# EUROPEAN PATENT APPLICATION

(11) **EP 4 535 035 A1**
(43) Date of publication of application: **09.04.2025**
(21) Application number: 23202210.3
(22) Date of filing: 06.10.2023
(51) Int. Cl.: G01S 13/536, G01S 13/34, G01S 13/58, G01S 7/35, G01S 13/931

(54) **A VEHICLE RADAR SYSTEM ADAPTED TO MINIMIZE THE OCCURRENCE OF DETECTIONS THAT COINCIDE AT THE SAME DOPPLER BIN**

(71) Applicant: Magna Electronics Sweden AB, 447 37 Vårgårda (SE)
(72) Inventor: Moss, Jonathan, 85716 Unterschleissheim (DE)
(74) Representative: Westpatent AB

(57) **Abstract**

The present disclosure relates to a vehicle radar system (101) having an ego velocity (v₀) and comprising a control unit (130) and a transceiver unit (110) with a plurality of transmitter antenna arrangements (210a, 210b) and a transmitter unit (208) arranged to generate FMCW radar waveforms (204a, 204b) that are fed into the antenna arrangements (210a, 210b) and having a certain phase shift increment (Δω₁, Δω₁'; Δω₂, Δω₂') from one ramp (r) to the next ramp (r). The vehicle radar system (101) is adapted to acquire detections (401, 402, 403, 404) associated with at least two target objects (140, 141) and determine a relative velocity (vᵣ₁, vᵣ₂) for said target objects (140, 141) . The control unit (130) is adapted to determine the ego velocity (v₀) and to control the transmitter unit (208) to change the phase shift increments (Δω₁, Δω₁'; Δω₂, Δω₂'₄) in dependence of at least one of the ego velocity (v₀) and the determined relative velocity (vᵣ₁, vᵣ₂).

## Description

The present disclosure relates to a vehicle radar system having an ego velocity and comprising a control unit and a transceiver unit that in turn comprises a plurality of transmitter antenna arrangements and a transmitter unit arranged to generate FMCW, Frequency Modulated Continuous Wave, radar waveforms.

A radar system comprises means for generating radar signals that are transmitted, reflected and received by means of appropriate antennas comprised in the radar system. The signal may comprise so-called chirp ramps in an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp.

Such a radar system may be in the form of a multiple-input multiple-output (MIMO) radar as disclosed in the document US 2011140949 which describes a MIMO radar where a transmitter transmits FMCW signals and a receiver receives echo signals which are mixed with the transmitted signal. The mixed signal is then converted into a digital signal.

MIMO enables transmitting with several transmitters simultaneously and extract the signal from every transmitter after receiving. One common technique to do this for an FMCW signal is DDMA (Doppler Division Multiple Access) that allows a virtual array antenna that comprises N_Tx × N_Rx virtual antennas, Tx meaning transmitter and Rx meaning receiver. This technique uses a programmable phase shifter for every transmitter to modulate an artificial Doppler frequency to every transmitted signal. As no two transmitters use the same modulated artificial Doppler frequency, every transmitter is seen on a different location in the Doppler spectrum. DDMA requires the modulated Doppler frequencies to be known to detected signals in the Doppler spectrum to specific transmitters.

If there are two or more objects that are not resolved by the range FFT and have different relative velocities and thus different Doppler frequencies, one artificial Doppler-modulated transmit signal of one object can collide with one artificial Doppler-modulated transmit signal of another object. If this happens, a subset of the received signals is contaminated by signals of another object and thus will introduce errors in subsequent processing steps, e.g. a target being missed, or confusion as to which doppler peak corresponds to which Tx antenna of which target.

In other words, each target appears as N_Tx targets in the Doppler domain which can cause problems in realistic environments when multiple targets appear in the same range gate and different positions in the Doppler domain. Since each target appears as N_Tx peaks, then the peaks can overlap and in some cases hide targets or create confusion.

The object of the present disclosure is to provide a vehicle radar system that is arranged to counteract the above problem.

This object is obtained by means of a vehicle radar system having an ego velocity and comprising a control unit and a transceiver unit that in turn comprises a plurality of transmitter antenna arrangements and a transmitter unit arranged to generate FMCW, Frequency Modulated Continuous Wave, radar waveforms. The vehicle radar system is adapted to acquire detections associated with at least two target objects and determine a relative velocity for said target objects. The transmitter unit is adapted to feed each one of at least two transmitter antenna arrangements with a corresponding FMCW radar waveform having a certain phase shift increment from one ramp to the next ramp such that an artificial Doppler modulation is inflicted to the FMCW radar waveforms that are transmitted by the transmitter antenna arrangements. The control unit is adapted to determine the ego velocity and to control the transmitter unit to change the phase shift increment for at least one FMCW radar waveform in dependence of at least one of the ego velocity and the determined relative velocity.

This means that the probability of detections for different target objects that coincide at the same Doppler bin to such an extent that the two detections cannot be distinguished from each other is lowered.

According to some aspects, the transmitter unit comprises a signal generator and a phase shifter, where the signal generator is connected to the phase shifter that in turn is connected to the transmitter antenna arrangements. The phase shifter is a programmable phase shifter that is adapted to modulate an artificial Doppler frequency to the FMCW radar waveforms.

This provides an accurate and easily controllable phase shift.

According to some aspects, the transceiver unit further comprises a receiver unit and a plurality of receiver antenna arrangements that are adapted to receive signals that have been reflected by one or more target objects. According to some further aspects, the control unit comprises a Digital Signal Processor, DSP, arrangement that is adapted to process digital signals input from the receiver unit.

According to some aspects, the control unit is adapted to distinguish between received signals that are associated with different detected objects in the Doppler spectrum by finding patterns of signals caused by the artificial Doppler modulation of the FMCW radar waveforms. This means that well-known FDMM techniques can be applied to resolve the targets objects.

According to some aspects, the control unit is adapted to control the signal generator, the phase shifter and the receiver unit. This means that these devices are controlled in an efficient and centralized manner.

This object is also obtained by means of vehicles and methods associated with the above advantages.

### BRIEF DESCRIPTION OF THE DRAWINGS

The present disclosure will now be described more in detail with reference to the appended drawings, where:
- Figure 1: shows a schematic top view of a vehicle;
- Figure 2: schematically illustrates a simplified schematic of a vehicle radar system;
- Figure 3A: schematically illustrates a graphic representation of a first FMCW radar waveform;
- Figure 3B: schematically illustrates a graphic representation of a second FMCW radar waveform;
- Figure 4: schematically illustrates a first graphic representation of spectral amplitude as a function of Doppler index for detections of two objects;
- Figure 5: schematically illustrates a second graphic representation of spectral amplitude as a function of Doppler index for detections of two objects;
- Figure 6: schematically illustrates a third graphic representation of spectral amplitude as a function of Doppler index for detections of two objects;
- Figure 7: schematically illustrates a control unit;
- Figure 8: schematically illustrates a computer program product; and
- Figure 9: shows a flowchart for methods according to the present disclosure.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

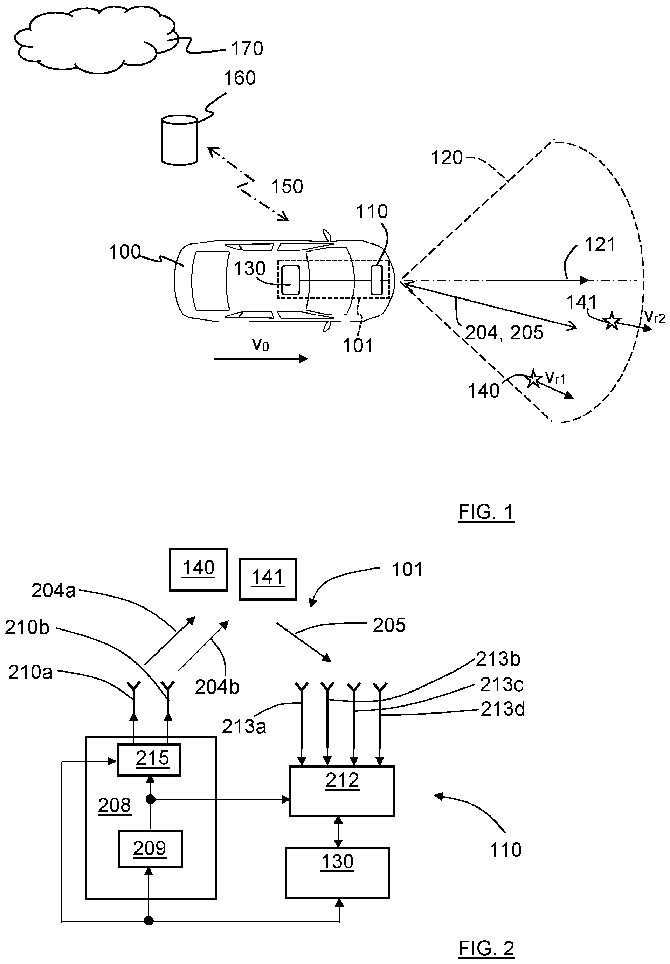

Figure 1 shows a vehicle 100 equipped with a vehicle radar system 101 that comprises a control unit 130 and a transceiver unit 110. With reference also to Figure 2, the transceiver unit 110 in turn comprises a plurality of transmitter antenna arrangements 210a, 210b and a transmitter unit 208 arranged to generate FMCW, Frequency Modulated Continuous Wave, radar waveforms 204a, 204b.

The vehicle radar system 101 is adapted to acquire detections 401, 402, 403, 404 associated with at least two target objects 140, 141 and determine a relative velocity vᵣ₁, vᵣ₂ for said target objects 140, 141, in the example there are two target objects 140, 141, a first target object 140 that is ground stationary such as a guard rail pole, and a second target object 141 that is moving relative the ground, for example a target vehicle 141.

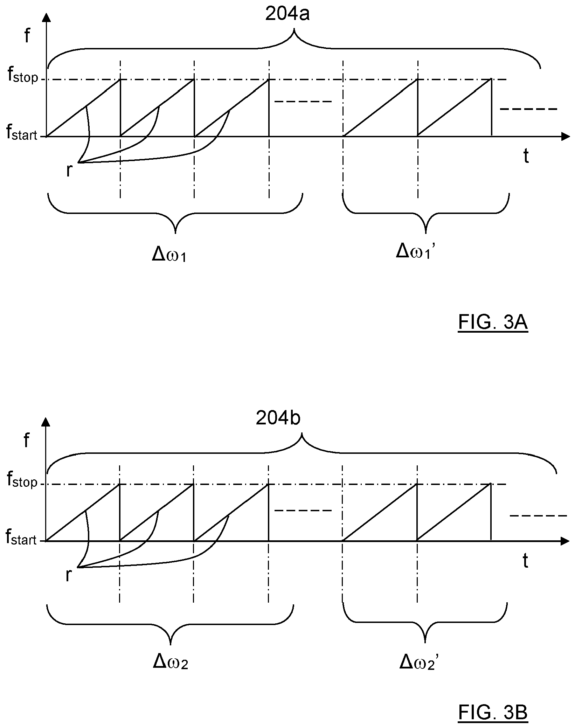

With reference also to Figure 3A and Figure 3B, the transmitter unit 208 is adapted to feed each one of at least two transmitter antenna arrangements 210a, 210b with a corresponding FMCW radar waveform 204a, 204b having a certain phase shift increment Δω₁, Δω₁'; Δω₂, Δω₂' from one ramp r to the next ramp r such that an artificial Doppler modulation is inflicted to the FMCW radar waveforms 204a, 204b that are transmitted by the transmitter antenna arrangements 210a, 210b. The ramps r are sometimes called chirp ramps, chirp signals and the like.

This means that the vehicle radar system 101 is adapted for DDMA, Doppler Division Multiple Access.

According to some aspects, in the example shown in Figure 2, there is a first transmitter antenna arrangement 210a that is fed with a first radar waveform 204a and a second transmitter antenna arrangement 210b that is fed with a second radar waveform 204b, and as illustrated in Figure 3A and Figure 3B each radar waveform 204a, 204b, comprises at least two corresponding successive sequences of radar signal ramps r.

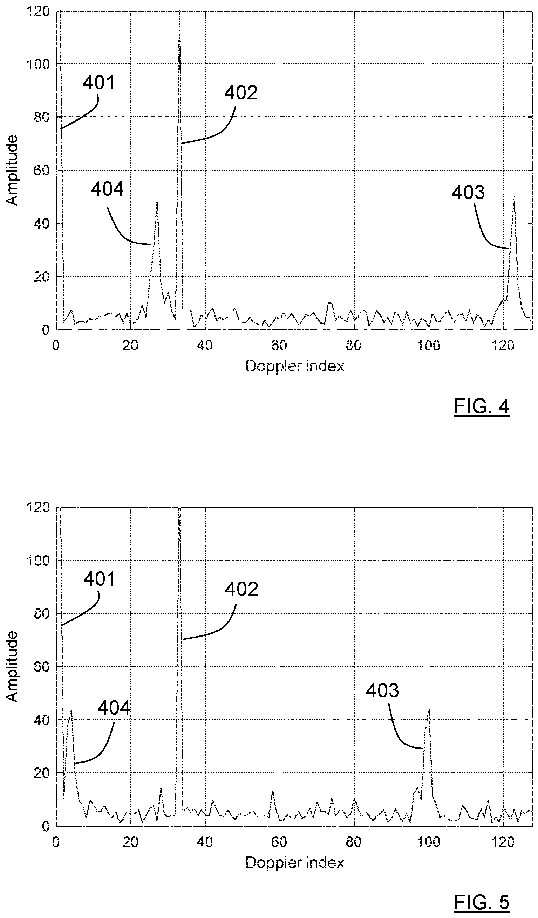

According to the present disclosure, the control unit 130 is adapted to determine the ego velocity v₀ and to control the transmitter unit 208 to change the phase shift increment Δω₁, Δω₁'; Δω₂, Δω₂' for at least one FMCW radar waveform 204a, 204b in dependence of at least one of the ego velocity v₀ and the determined relative velocities vᵣ₁, vᵣ₂. In this manner may for example detections 401, 402, 403, 404, as illustrated in for example Figure 4, that coincide at the same Doppler bin to such an extent that they cannot be distinguished from each other are avoided. In other words, the occurrence of detections that coincide at the same Doppler bin are minimized. The ego velocity v₀ is used when one target object 140 is ground stationary, such as a guardrail post.

This means that the probability of detections for different target objects that coincide at the same Doppler bin to such an extent that the two detections cannot be distinguished from each other is lowered.

According to some aspects, the transmitter unit 208 comprises a signal generator 209 and a phase shifter 215, where the signal generator 209 is connected to the phase shifter 215 that in turn is connected to the transmitter antenna arrangements 210a, 210b, where the phase shifter 215 is a programmable phase shifter 215 that is adapted to modulate an artificial Doppler frequency to the FMCW radar waveforms 204a, 204b.

This provides an accurate and easily controllable phase shift.

According to some aspects, the control unit 130 is adapted to control the signal generator 209, the phase shifter 215 and the receiver unit 212. This means that these devices are controlled in an efficient and centralized manner.

According to some aspects, the transceiver unit 110 further comprises a receiver unit 212 and a plurality of receiver antenna arrangements 213a, 213b, 213c, 213d that are adapted to receive signals 205 that have been reflected by one or more target objects 140, 141.

For example, according to some aspects, as shown in Figure 3A and Figure 3B, the first FMCW radar waveform 204a may be modulated with a first phase shift increment Δω₁ that is linear over time, for example 0° increments, and the second FMCW radar waveform 204b may be modulated with a second phase shift increment Δω₂ that is linear over time, for example 60° increments. These are of course only examples, there can be any value for the phase shift increments Δω₁, Δω₂.

The ego vehicle velocity v₀ and the relative velocity vᵣ₁, vᵣ₂ of the target objects 140, 141 are used as input for adapting the phase modulation of the transmitter antenna arrangements 210a, 210b to avoid the collision of the corresponding peaks in the Doppler domain. An example will be described in the following for the first target object 140 and the second target object 141 as described above. As mentioned above, the ego vehicle velocity v₀ is normally only used when one of the targets objects is a stationary object.

According to some aspects, the control unit 130 comprises a Digital Signal Processor, DSP, arrangement 632 that is adapted to process digital signals input from the receiver unit 212. This enables proper processing of the acquired radar signals.

According to some aspects, the control unit 130 is adapted to distinguish between received signals that are associated with different detected objects 140, 141 in the Doppler spectrum by finding patterns of signals caused by the artificial Doppler modulation of the FMCW radar waveforms 204a, 204b. This means that well-known FDMM techniques can be applied to resolve the targets objects.

With reference also to Figure 4 - Figure 6 the Doppler domain as amplitude versus Doppler index is illustrated for different situations.

In Figure 4, there is a first peak 401 that corresponds to the guard rail post 140 as detected by means of the first radar waveform 204a transmitted by the first transmitter antenna arrangement 210a, and a second peak 402 that corresponds to the guard rail post 140 as detected by means of the second radar waveform 204b transmitted by the second transmitter antenna arrangement 210b. These detections may be regarded as belonging to so-called street furniture, i.e., stationary items that are positioned along a road. Ground clutter can also give rise to such detections.

Furthermore, there is a third peak 403 that corresponds to the target vehicle 141 as detected by means of the first radar waveform 204a signals transmitted by the first transmitter antenna arrangement 210a, and a fourth peak 404 that corresponds to the target vehicle 141 as detected by means of the second radar waveform 204b transmitted by the second transmitter antenna arrangement 210b. All peaks 401, 402, 403, 404 are present in the same range gate and can thus not be separated by distance.

The target vehicle 141 is detectable by means of both radar waveforms 204a, 204b and possible to distinguish from each other.

In Figure 5, the target vehicle 141 has a different relative velocity, which shows by the third peak 403 and the fourth peak 404 moving in the Doppler domain relative the first peak 401 and the second peak 402 such that the fourth peak 404 almost merges with the first peak 401 such that the target vehicle 141 as detected by means of the second radar waveform 204b transmitted by the second transmitter antenna arrangement 210b would no longer be detectable at a certain point.

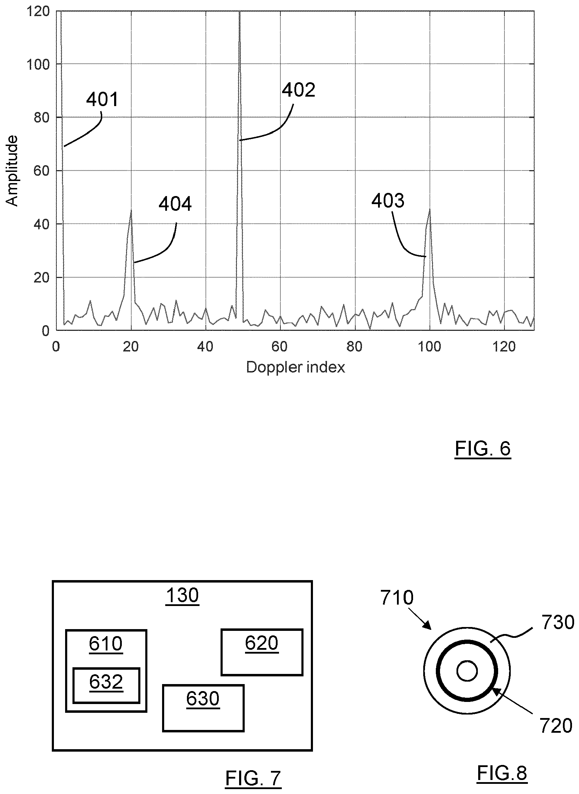

In order to handle this, in accordance with the present disclosure, this is recognized by the radar system 101, and the phase shift of either radar waveform 204a, 204b, or both are shifted to create the necessary Doppler space for the target vehicle 141. One such example is illustrated in Figure 6, where the second phase shift increment Δω₂ of the second radar waveform 204b has been changed to an updated second phase shift increment Δω₂' in dependence of at least the ego velocity v₀ and the determined relative velocity vᵣ₁, vᵣ₂ such that detections 401, 404, illustrated as peaks in Figure 4 - Figure 6, that coincide at the same Doppler bin to such an extent that they cannot be distinguished from each other are avoided. The phase increment Δω₁ is not changed in this example. The phase shift increment is according to some aspects changed to an updated phase shift increment in a pause where no ramps r are transmitted.

In other words, the updated second phase shift increment Δω₂' is adapted to ensure that there is no risk of the target vehicle 141, as detected by means of the second radar waveform 204b transmitted by the second transmitter antenna arrangement 210b, merging into the guard rail post 140, as detected by means of the first radar waveform 204a transmitted by the first transmitter antenna arrangement 210a and being lost.

Alternatively, or additionally, the first phase shift increment Δω₁ of the first radar waveform 204a could be changed to an updated first phase shift increment Δω₁' in dependence of at least the ego velocity v₀ and the determined relative velocity vᵣ₁, vᵣ₂.

The above is applicable for all types and combinations of target objects: one or more ground stationary objects and one or more moving objects, where there is a risk of target object detection peaks merging into one another in the manner described above, in particular target objects that occur in the same range gate.

The present disclosure is thus applicable to any scenario where a target object that should be monitored accurately, for example the second target object 141 above, will be in the same range bin as another target object, such as the first target object 140 above. These scenarios cause problems since the target objects cannot be separated in range and only Doppler. Because of the use of Doppler Division Multiple Access (DDMA), the multiple peaks of each target, each corresponding to one Tx channel, can overlap and create problems.

The ground stationary target objects are of particular relevance since these can arrive in a certain range gate at any time. Other moving target objects would normally be tracked, allowing the control unit 130 to predict when/if a moving target object is in the same range gate as another target object.

It should be noted that ground stationary target objects like guardrail posts may not be tracked and may not be considered target objects of interest since they serve no useful function, other than describing the side of the road, particularly when a whole line of them is seen. However, for ground stationary target objects, the relative velocity is of course directly dependent on the ego velocity v₀ and it is known when guardrail posts will be present, and in which Doppler bins each guardrail post will be present from the multiple Tx channels.

In accordance with the present disclosure, the ego velocity v₀ and the relative velocities vᵣ₁, vᵣ₂ of the target objects 140, 141 are taken into account when the phase modulation of the transmitter antenna arrangements 210a, 210b is adapted to avoid the collision of the peaks in the doppler domain.

A simplified example of the process can be described as follows:
1) Identify tracked target objects 141 of interest.
2) Identify ego velocity (v₀).
3) Determine radial speed of other target objects, such as road boundary posts or stationary vehicles that are, or will soon be in the range gate that contains the target objects 141 of interest.
4) Use the acquired data to adapt the radar waveforms 204a, 204b to avoid the detections 401, 402, 403, 404 that coincide at the same Doppler bin.

According to some aspects, it can be taken into account that that at higher velocities for the ego vehicle 100 and moving target objects 141, ground clutter and/or ground stationary target objects 140 may have aliased in the Doppler domain due to under-sampling of the environment.

The is enabled since the radar system 101 knows the Doppler Nyquist and hence can predict if ground stationary targets wrap-round when the ego vehicle is travelling at a sufficient velocity.

The Doppler can be unwrapped for tracked objects by observing the change in range over time.

State of the art radar systems tend to use waveforms where the chirp timing is fast enough to avoid aliasing, however this may not always be the case.

In case of multiple target objects in the same range bin, or a very cluttered environment, or when many Tx channels or transmitter antenna arrangements are used simultaneously, the Doppler positions of the radar waveforms 204a, 204b can be alternated such that the target objects appear in every other radar cycle, or every Nth radar cycle or block of chirps.

The vehicle radar system 101 may be comprised in a single physical unit or may be distributed over more than one physical unit. Some parts of the radar system functionality may even be comprised in a remote server 160 or cloud-based resource 170 connected to the vehicle 100 via wireless link 150.

The remote server 160 may in turn may be comprised in a cloud-based resource 170 or remote network. This server and network may be configured to assist the vehicle 100 in performing various operations such as radar signal processing, interference mitigation, beamforming, and the like.

Figure 7 schematically illustrates, in terms of a number of functional units, the components of the control unit 130 according to an embodiment. Processing circuitry 610 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 630. The processing circuitry 610 may further be provided as at least one application specific integrated circuit (ASIC), or field programmable gate array (FPGA).

Particularly, the processing circuitry 610 is configured to cause the control unit 130 to perform a set of operations, or steps. For example, the storage medium 630 may store the set of operations, and the processing circuitry 610 may be configured to retrieve the set of operations from the storage medium 630 to cause the control unit 130 to perform the set of operations. The set of operations may be provided as a set of executable instructions. Thus, the processing circuitry 610 is thereby arranged to execute methods and operations as herein disclosed.

The storage medium 630 may also comprise persistent storage, which, for example, can be any single one or combination of magnetic memory, optical memory, solid state memory or even remotely mounted memory.

The control unit 130 may further comprise a communications interface 620 for communications with at least one other unit. As such, the communications interface 620 may comprise one or more transmitters and receivers, comprising analogue and digital components and a suitable number of ports for wired or wireless communication.

The processing circuitry 610 is adapted to control the general operation of the control unit 130 e.g. by sending data and control signals to the external unit and the storage medium 630, by receiving data and reports from the external unit, and by retrieving data and instructions from the storage medium 630. Other components, as well as the related functionality, of the control unit 130 are omitted in order not to obscure the concepts presented herein.

Figure 8 shows a computer program product 710 comprising computer executable instructions 720 arranged on a computer readable medium 730 to execute any of the methods disclosed herein.

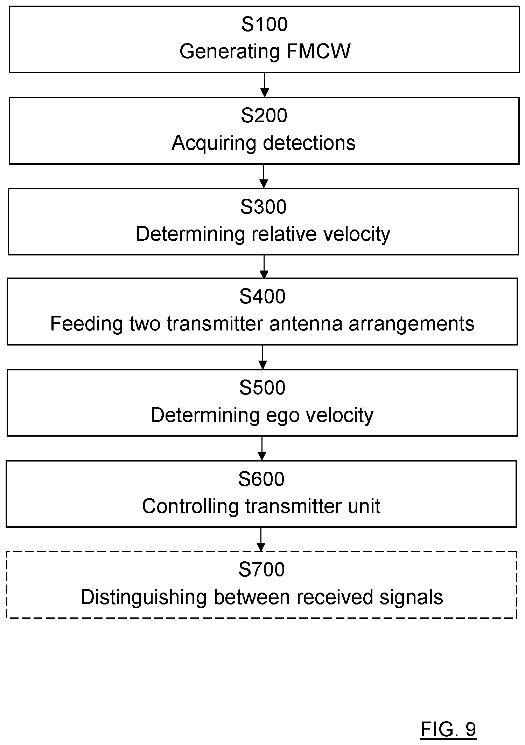

With reference to Figure 9, the present disclosure also relates to a method for a vehicle radar system 101 having an ego velocity v₀. The method comprises generating S100 FMCW, Frequency Modulated Continuous Wave, radar waveforms 204a, 204b, acquiring S200 detections 401, 402, 403, 404 associated with at least two target objects 140, 141, determining S300 a relative velocity vᵣ₁, vᵣ₂ for said target objects 140, 141. The method further comprises feeding S400 each one of at least two transmitter antenna arrangements 210a, 210b with a corresponding FMCW radar waveform 204a, 204b having a certain phase shift increment Δω₁, Δω₁'; Δω₂, Δω₂' from one ramp r to the next ramp r. In this way, an artificial Doppler modulation is inflicted to the FMCW radar waveforms 204a, 204b that are transmitted by the transmitter antenna arrangements 210a, 210b. The method further comprises determining S500 the ego velocity v₀, and controlling S600 the transmitter unit 208 to change the phase shift increment Δω₁, Δω₁'; Δω₂, Δω₂' for at least one FMCW radar waveform 204a, 204b in dependence of at least one of the ego velocity v₀ and the determined relative velocity vᵣ₁, vᵣ₂. In this way, detections 401, 402, 403, 404 that coincide at the same Doppler bin to such an extent that they cannot be distinguished from each other can be avoided.

According to some aspects, the method further comprises distinguishing S700 between received signals that are associated with different detected objects 140, 141 in the Doppler spectrum by finding patterns of signals caused by the artificial Doppler modulation of the FMCW radar waveforms 204a, 204b.

## Claims

1. A vehicle radar system (101) having an ego velocity (v₀) and comprising a control unit (130) and a transceiver unit (110) that in turn comprises a plurality of transmitter antenna arrangements (210a, 210b) and a transmitter unit (208) arranged to generate FMCW, Frequency Modulated Continuous Wave, radar waveforms (204a, 204b),
where the vehicle radar system (101) is adapted to acquire detections (401, 402, 403, 404) associated with at least two target objects (140, 141) and determine a relative velocity (vᵣ₁, vᵣ₂) for said target objects (140, 141), and
where the transmitter unit (208) is adapted to feed each one of at least two transmitter antenna arrangements (210a, 210b) with a corresponding FMCW radar waveform (204a, 204b) having a certain phase shift increment (Δω₁, Δω₁'; Δω₂, Δω₁') from one ramp (r) to the next ramp (r) such that an artificial Doppler modulation is inflicted to the FMCW radar waveforms (204a, 204b) that are transmitted by the transmitter antenna arrangements (210a, 210b),
**characterized in that** the control unit (130) is adapted to determine the ego velocity (v₀) and to control the transmitter unit (208) to change the phase shift increment (Δω₁, Δω₁'; Δω₂, Δω₂' for at least one FMCW radar waveform (204a, 204b) in dependence of at least one of the ego velocity (v₀) and the determined relative velocity (vᵣ₁, vᵣ₂).

2. The vehicle radar system (101) according to claim 1, wherein the transmitter unit (208) comprises a signal generator (209) and a phase shifter (215), where the signal generator (209) is connected to the phase shifter (215) that in turn is connected to the transmitter antenna arrangements (210a, 210b), where the phase shifter (215) is a programmable phase shifter (215) that is adapted to modulate an artificial Doppler frequency to the FMCW radar waveforms (204a, 204b).

3. The vehicle radar system (101) according to any one of the claims 1 or 2, wherein the transceiver unit (110) further comprises a receiver unit (212) and a plurality of receiver antenna arrangements (213a, 213b, 213c, 213d) that are adapted to receive signals (205) that have been reflected by one or more target objects (140, 141).

4. The vehicle radar system (101) according to claim 3, wherein the control unit (130) comprises a Digital Signal Processor, DSP, arrangement (632) that is adapted to process digital signals input from the receiver unit (212).

5. The vehicle radar system (101) according to claim 4, wherein the control unit (130) is adapted to distinguish between received signals that are associated with different detected objects (140, 141) in the Doppler spectrum by finding patterns of signals caused by the artificial Doppler modulation of the FMCW radar waveforms (204a, 204b).

6. The vehicle radar system (101) according to any one of the claims 2-5, wherein the control unit (130) is adapted to control the signal generator (209), the phase shifter (215) and the receiver unit (212).

7. A vehicle (100) comprising the vehicle radar system (101) according to any one of the previous claims.

8. A method for a vehicle radar system (101) having an ego velocity (v₀), the method comprising
generating (S100) FMCW, Frequency Modulated Continuous Wave, radar waveforms (204a, 204b);
acquiring (S200) detections (401, 402, 403, 404) associated with at least two target objects (140, 141);
determining (S300) a relative velocity (vᵣ₁, vᵣ₂) for said target objects (140, 141); and
feeding (S400) each one of at least two transmitter antenna arrangements (210a, 210b) with a corresponding FMCW radar waveform (204a, 204b) having a certain phase shift increment (Δω₁, Δω₁'; Δω₂, Δω₁') from one ramp (r) to the next ramp (r) such that an artificial Doppler modulation is inflicted to the FMCW radar waveforms (204a, 204b) that are transmitted by the transmitter antenna arrangements (210a, 210b), **characterized in that** the method further comprises
determining (S500) the ego velocity (v₀); and
controlling (S600) the transmitter unit (208) to change the phase shift increment (Δω₁, Δω₁'; Δω₂, Δω₁') for at least one FMCW radar waveform (204a, 204b) in dependence of at least one of the ego velocity (v₀) and the determined relative velocity (vᵣ₁, vᵣ₂).

9. The method according to claim 8, further comprising distinguishing (S700) between received signals that are associated with different detected objects (140, 141) in the Doppler spectrum by finding patterns of signals caused by the artificial Doppler modulation of the FMCW radar waveforms (204a, 204b) .

10. A control unit (2) adapted to perform the method according to any one of the claims 8 or 9.
